# EUROPEAN PATENT APPLICATION

(11) **EP 4 501 124 A1**
(43) Date of publication of application: **05.02.2025**
(21) Application number: 23775076.5
(22) Date of filing: 24.03.2023
(51) Int. Cl.: A23G 1/32, A23G 1/00, A23G 9/32, A23L 2/00, A23L 2/52

(54) **PROCESSED COCOA BEAN PRODUCT, INGREDIENT COMPOSITION FOR FOOD PRODUCT, AND FOOD PRODUCT**

(30) Priority: 25.03.2022 JP 2022050952
(71) Applicant: MEIJI CO., LTD, Chuo-ku Tokyo 104-8306 (JP)
(72) Inventor: WATANABE Satoshi, Hachioji-shi, Tokyo 192-0919 (JP); UCHIDA Shuhei, Hachioji-shi, Tokyo 192-0919 (JP)
(74) Representative: TBK
(86) International application number: PCT/JP2023/011747
(87) International publication number: WO 2023/182483

(57) **Abstract**

An object of the present invention is to provide a cacao bean processed product having a strong taste like milk, a material for a food containing the cacao bean processed product, and a food containing the material for a food. The present invention provides a cacao bean processed product, a material for a food containing the cacao bean processed product, and a food containing the material for a food, wherein the cacao bean processed product contains: acetone; and at least one selected from 2-methylbutanal, 3-methylbutanal, and isopropyl alcohol, wherein the cacao bean processed product, when analyzed by solid phase microextraction-gas chromatography-mass spectrometry, satisfies at least one of the following (A) to (C):
(A) a ratio of a peak area of acetone to a peak area of 2-methylbutanal is 5.0 or more;
(B) ratio of a peak area of acetone to a peak area of 3-methylbutanal is 8.0 or more; and
(C) a ratio of a peak area of acetone to a peak area of isopropyl alcohol is 1.2 or more.

## Description

### FIELD OF THE INVENTION

The present invention relates to a cacao bean processed product, a material for a food containing the cacao bean processed product, and a food containing the material for a food.

### BACKGROUND ART

A seed of cacao (*Theobroma cacao*) is called a cacao bean. A cacao mass has been known as a cacao bean processed product, and used as a material for a food.

A common method for preparing a cacao mass is as follows: first, cacao beans are taken out of a cacao pod, the cacao beans taken out are fermented, the fermented cacao beans are dried, and the dried cacao beans are subjected to a roasting treatment and a shelling treatment to prepare cacao nibs; and subsequently, the cacao nibs are subjected to a grinding treatment to prepare a cacao mass.

Criollo, Forastero, Trinitario, and so on have been known as cacao varieties. The color of the endosperm of a cacao bean of a common cacao variety is purple immediately after harvesting, brownish purple after fermenting, and brown after drying.

On the other hand, a cacao variety such that the endosperm of a cacao bean is white is known. While the endosperm of a cacao bean of such cacao variety is white after harvesting, however, the endosperm undergoes browning when being fermented. The browning occurs even after the cacao bean is dried without being fermented. In view of such circumstances, Patent Document 1 discloses a method for producing white cacao nibs. According to Patent Document 1, white cacao nibs are produced in such a manner that cacao beans with white endosperms are harvested, the harvested cacao beans are pre-heated without being fermented or after being slightly fermented, and the pre-heated cacao beans are dried. The pre-heating of cacao beans is performed at a temperature of approximately 60 to 120°C for about 30 seconds to 1 hour by soaking in hot water, by steaming with water vapor, or by heating under increased pressure in a water vapor atmosphere. The pre-heating causes the inactivation of enzymes in the cacao beans or kills microorganism attaching to the cacao beans. The drying after the pre-heating is performed in the sun, or with hot air, or by direct heating.

### CITATION LIST

### PATENT DOCUMENT

Patent Document 1: Japanese Patent Laid-Open No. 7-16059

### SUMMARY OF THE INVENTION

### TECHNICAL PROBLEM

A cacao mass prepared from conventional fermented cacao beans has strong cacao taste and roasted taste and weak taste like milk. On the other hand, a cacao mass prepared from conventional unfermented cacao beans has weaker cacao taste and roasted taste than those prepared from conventional fermented cacao beans. However, the cacao mass prepared from conventional unfermented cacao beans strongly exhibits at least one of bean odor, grassy odor, and sour taste, and has weak taste like milk.

In view of such circumstances, an object of the present invention is to provide a cacao bean processed product having a strong taste like milk, a material for a food containing the cacao bean processed product, and a food containing the material for a food.

### SOLUTION TO PROBLEM

The present invention provides the following cacao bean processed products, materials for a food, and foods.
[1] A cacao bean processed product containing:
   acetone; and
   at least one selected from 2-methylbutanal, 3-methylbutanal, hexanal, acetic acid, and isopropyl alcohol,
   wherein the cacao bean processed product, when analyzed by solid phase microextraction-gas chromatography-mass spectrometry, satisfies at least one of the following (A) to (E):
      (A) a ratio of a peak area of acetone to a peak area of 2-methylbutanal is 5.0 or more;
      (B) a ratio of a peak area of acetone to a peak area of 3-methylbutanal is 8.0 or more;
      (C) a ratio of a peak area of acetone to a peak area of isopropyl alcohol is 1.2 or more;
      (D) a ratio of a peak area of acetone to a peak area of hexanal is 4.0 or more; and
      (E) a ratio of a peak area of acetone to a peak area of acetic acid is 0.03 or more.
[2] The cacao bean processed product according to [1],
   wherein the cacao bean processed product contains:
   acetone; and
   at least one selected from 2-methylbutanal, 3-methylbutanal, and isopropyl alcohol, and
   wherein the cacao bean processed product, when analyzed by solid phase microextraction-gas chromatography-mass spectrometry, satisfies at least one of (A) to (C).
[3] The cacao bean processed product according to [2],
   wherein the cacao bean processed product contains at least one selected from hexanal and acetic acid, and
   wherein the cacao bean processed product, when analyzed by solid phase microextraction-gas chromatography-mass spectrometry, satisfies at least one of (D) and (E).
[4] The cacao bean processed product according to [3],
   wherein the cacao bean processed product contains acetone, 2-methylbutanal, 3-methylbutanal, isopropyl alcohol, hexanal, and acetic acid, and
   wherein the cacao bean processed product, when analyzed by solid phase microextraction-gas chromatography-mass spectrometry, satisfies all of (A) to (E).
[5] The cacao bean processed product according to any one of [1] to [4], wherein L*, a*, and b* values of L*a*b* Color Space are L*: 42 or more and 55 or less, a*: 3.0 or more and 7.0 or less, and b*: 9.0 or more and 15.0 or less, respectively.
[6] The cacao bean processed product according to any one of [1] to [5], wherein the amount of γ-aminobutyric acid is 200 µg/g or less.
[7] The cacao bean processed product according to any one of [1] to [6], wherein the cacao bean processed product is a cacao mass.
[8] The cacao bean processed product according to [7], wherein, in a state where the cacao bean processed product has a median diameter of 7 µm or more and 8 µm or less and a water content of 3 mass% or more and 4 mass% or less, the cacao bean processed product has a viscosity of 10000 cP or less.
[9] A material composition for a food, containing the cacao bean processed product according to any one of [1] to [8].
[10] A food containing the material composition for a food according to [9].
[11] The food according to [10], wherein the food is selected from beverages, frozen desserts, and oily confectioneries.
[12] The food according to [10] or [11],
   wherein the food contains:
   acetone; and
   at least one selected from 2-methylbutanal and 3-methylbutanal, and
   wherein the food, when analyzed by solid phase microextraction-gas chromatography-mass spectrometry, satisfies at least one of the following (F) and (G):
      (F) a ratio of a peak area of acetone to a peak area of 2-methylbutanal is 0.25 or more; and
      (G) a ratio of a peak area of acetone to a peak area of 3-methylbutanal is 0.50 or more.
[13] The food according to [12], wherein the food is a beverage.

### ADVANTAGEOUS EFFECTS OF THE INVENTION

The present invention provides a cacao bean processed product having a strong taste like milk, a material for a food containing the cacao bean processed product, and a food containing the material for a food.

### DETAILED DESCRIPTION OF THE INVENTION

Hereinafter, the present invention will be described.

### < <Cacao Bean Processed Product> >

An aspect of the present invention relates to a cacao bean processed product.

The cacao bean processed product is a material obtained by processing a cacao bean.

A cacao bean is a seed of cacao (*Theobroma cacao*)*.* A cacao bean has a hull (shell or husk), and an endosperm (nib) and an embryo (germ) are contained in the hull. Examples of cacao varieties include the varieties Criollo, Forastero, and Trinitario.

The cacao bean processed product of the present invention may be a material obtained by processing a cacao bean of any cacao variety, as long as the material has Feature 1α described later, but is preferably a material obtained by processing a cacao bean of Criollo cacao. A kind of the variety Criollo is the variety Carmelo. In an embodiment, the cacao bean processed product of the present invention is a material obtained by processing a cacao bean of Carmelo cacao. The endosperm of a cacao bean of Carmelo cacao is white. The producing area of Carmelo cacao is preferably the United Mexican States.

Examples of the cacao bean processed product include a cacao nib, a cacao mass, a cocoa butter, a cocoa cake, and a cocoa powder. Among treated cacao beans that have been subjected to a desired treatment(s) after harvesting, products at any phases before production of a cacao nib do not correspond to the "cacao bean processed product" in the present invention. Examples of the products at any phases before production of a cacao nib among treated cacao beans that have been subjected to a desired treatment(s) after harvesting include a treated cacao bean that has been subjected to one or more treatments selected from a pulverizing treatment, a grinding treatment, a drying treatment, a sterilizing treatment, and a roasting treatment after harvesting.

A cacao nibs are a processed product obtained by subjecting a cacao bean to a shelling treatment and a roasting treatment. A sterilizing treatment may be performed on the cacao bean before performing the shelling treatment and the roasting treatment. The sterilizing treatment can be performed according to a method known as a common sterilizing method for a cacao bean. The shelling treatment may be performed before or after the roasting treatment. The shelling treatment can be performed according to a conventional method using a separator. Through the shelling treatment, the cacao bean is pulverized and the hull is removed. The roasting treatment can be performed according to a conventional method using a roaster. The roasting treatment can be performed to give a product temperature of 100°C or more and 160°C or less, for example.

A cacao mass is a processed product obtained by subjecting a cacao nib to a grinding treatment. The grinding treatment can be performed according to a conventional method using a grinder or a refiner. The grinding treatment may be performed after mixing a plurality of kinds of cacao nibs with a blender.

A cocoa butter and a cocoa cake are processed products obtained by subjecting a cacao mass to a fat content separation treatment. The separated fat content is a cocoa butter, and the residue after removal of a cocoa butter from a cacao mass is a cocoa cake. The fat content separation treatment can be performed according to a conventional method using a cocoa press.

A cocoa powder is a processed product obtained by subjecting a cocoa cake to a pulverizing treatment. The pulverizing treatment can be performed according to a conventional method using a cocoa mill.

The cacao bean processed product of the present invention may be a cacao bean processed product of any type as long as the cacao bean processed product has Feature 1α described later, but is preferably a cacao nibs or a cacao mass, and more preferably a cacao mass.

The following describes the features of the cacao bean processed product of the present invention.

### <Feature 1α>

The cacao bean processed product of the present invention contains: acetone; and at least one selected from 2-methylbutanal, 3-methylbutanal, isopropyl alcohol, hexanal, and acetic acid, wherein the cacao bean processed product of the present invention, when analyzed by solid phase microextraction-gas chromatography-mass spectrometry (SPME-GC/MS), satisfies at least one of the following (A) to (E):
(A) a ratio of a peak area of acetone to a peak area of 2-methylbutanal (hereinafter, referred to as "ratio R1") is 5.0 or more;
(B) a ratio of a peak area of acetone to a peak area of 3-methylbutanal (hereinafter, referred to as "ratio R2") is 8.0 or more;
(C) a ratio of a peak area of acetone to a peak area of isopropyl alcohol (hereinafter, referred to as "ratio R3") is 1.2 or more;
(D) a ratio of a peak area of acetone to a peak area of hexanal (hereinafter, referred to as "ratio R4") is 4.0 or more; and
(E) a ratio of a peak area of acetone to a peak area of acetic acid (hereinafter, referred to as "ratio R5") is 0.03 or more.
This feature is referred to as "Feature 1α".

The cacao bean processed product of the present invention contains at least acetone and 2-methylbutanal if satisfying (A), contains at least acetone and 3-methylbutanal if satisfying (B), contains at least acetone and isopropyl alcohol if satisfying (C), contains at least acetone and hexanal if satisfying (D), and contains at least acetone and acetic acid if satisfying (E).

The cacao bean processed product of the present invention may contain two, three, four, or five selected from 2-methylbutanal, 3-methylbutanal, isopropyl alcohol, hexanal, and acetic acid. The cacao bean processed product of the present invention may contain a component other than acetone, 2-methylbutanal, 3-methylbutanal, isopropyl alcohol, hexanal, and acetic acid.

It is preferable that the cacao bean processed product of the present invention contains: acetone; and at least one selected from 2-methylbutanal, 3-methylbutanal, and isopropyl alcohol, wherein the cacao bean processed product of the present invention, when analyzed by solid phase microextraction-gas chromatography-mass spectrometry, satisfies at least one of (A) to (C). This embodiment is referred to as "Embodiment 1".

In Embodiment 1, it is preferable that the cacao bean processed product contains: acetone; and at least two selected from 2-methylbutanal, 3-methylbutanal, and isopropyl alcohol, wherein the cacao bean processed product, when analyzed by solid phase microextraction-gas chromatography-mass spectrometry, satisfies at least two of (A) to (C). This embodiment is referred to as "Embodiment 2".

In Embodiment 1, it is more preferable that the cacao bean processed product contains acetone, 2-methylbutanal, 3-methylbutanal, and isopropyl alcohol, wherein the cacao bean processed product, when analyzed by solid phase microextraction-gas chromatography-mass spectrometry, satisfies all of (A) to (C). This embodiment is referred to as "Embodiment 3".

In Embodiments 1 to 3, it is preferable that the cacao bean processed product contains at least one selected from hexanal and acetic acid, wherein the cacao bean processed product, when analyzed by solid phase microextraction-gas chromatography-mass spectrometry, satisfies at least one of (D) and (E).

In Embodiments 1 to 3, it is more preferable that the cacao bean processed product contains hexanal and acetic acid, wherein the cacao bean processed product, when analyzed by solid phase microextraction-gas chromatography-mass spectrometry, satisfies all of (D) and (E).

In the most preferable embodiment, the cacao bean processed product contains acetone, 2-methylbutanal, 3-methylbutanal, isopropyl alcohol, hexanal, and acetic acid, wherein the cacao bean processed product, when analyzed by solid phase microextraction-gas chromatography-mass spectrometry, satisfies all of (A) to (E).

Acetone serves as an indicator of taste like milk, 2-methylbutanal as an indicator of bean odor, 3-methylbutanal as an indicator of bean odor, hexanal as an indicator of grassy odor, acetic acid as an indicator of sour taste, and isopropyl alcohol as an indicator of pungent odor.

The fact that the ratio R1 is 5.0 or more indicates that the cacao bean processed product of the present invention has stronger taste like milk and weaker bean odor than cacao bean processed products obtained by processing conventional fermented cacao beans or unfermented cacao beans. From the viewpoint of achieving stronger taste like milk and weaker bean odor, the ratio R1 is preferably 6.0 or more, more preferably 8.0 or more, and still more preferably 10 or more. The upper limit of the ratio R1 is not limited. The ratio R1 may be, for example, 45 or less, or 35 or less, or 25 or less. Each of these upper limits may be combined with any of the above-described lower limits.

The fact that the ratio R2 is 8.0 or more indicates that the cacao bean processed product of the present invention has stronger taste like milk and weaker bean odor than cacao bean processed products obtained by processing conventional fermented cacao beans or unfermented cacao beans. From the viewpoint of achieving stronger taste like milk and weaker bean odor, the ratio R2 is preferably 10 or more, more preferably 15 or more, and still more preferably 25 or more. The upper limit of the ratio R2 is not limited. The ratio R2 may be, for example, 60 or less, or 50 or less, or 45 or less. Each of these upper limits may be combined with any of the above-described lower limits.

The fact that the ratio R3 is 1.2 or more indicates that the cacao bean processed product of the present invention has stronger taste like milk and weaker pungent odor than cacao bean processed products obtained by processing conventional fermented cacao beans or unfermented cacao beans. From the viewpoint of achieving stronger taste like milk and weaker pungent odor, the ratio R3 is preferably 1.3 or more, more preferably 1.4 or more, and still more preferably 1.5 or more. The upper limit of the ratio R3 is not limited. The ratio R3 may be, for example, 3.5 or less, or 3.0 or less, or 2.5 or less. Each of these upper limits may be combined with any of the above-described lower limits.

The fact that the ratio R4 is 4.0 or more indicates that the cacao bean processed product of the present invention has stronger taste like milk and weaker grassy odor than cacao bean processed products obtained by processing conventional fermented cacao beans or unfermented cacao beans. From the viewpoint of achieving stronger taste like milk and weaker grassy odor, the ratio R4 is preferably 5.0 or more, more preferably 6.0 or more, and still more preferably 7.0 or more. The upper limit of the ratio R4 is not limited. The ratio R4 may be, for example, 25 or less, or 20 or less, or 15 or less. Each of these upper limits may be combined with any of the above-described lower limits.

The fact that the ratio R5 is 0.03 or more indicates that the cacao bean processed product of the present invention has stronger taste like milk and weaker sour taste than cacao bean processed products obtained by processing conventional fermented cacao beans or unfermented cacao beans. From the viewpoint of achieving stronger taste like milk and weaker sour taste, the ratio R5 is preferably 0.04 or more, more preferably 0.05 or more, and still more preferably 0.06 or more. The upper limit of the ratio R5 is not limited. The ratio R5 may be, for example, 0.2 or less, or 0.15 or less, or 0.1 or less. Each of these upper limits may be combined with any of the above-described lower limits.

Analysis of the cacao bean processed product of the present invention by solid phase microextraction-gas chromatography-mass spectrometry (SPME-GC/MS) can be performed according to a method described in the Examples with the cacao bean processed product of the present invention as a sample.

It is preferable for the cacao bean processed product of the present invention to have one or more of Features 2α to 4α described later in addition to Feature 1α. From the viewpoint of achieving one or more of Features 2α to 4α described later in addition to Feature 1α, the cacao bean processed product of the present invention is preferably a material obtained by processing a cacao bean of Criollo cacao, more preferably a cacao nib or a cacao mass obtained by processing a cacao bean of Criollo cacao, and still more preferably a cacao mass obtained by processing a cacao bean of Criollo cacao. From the same viewpoint, the Criollo cacao is preferably Carmelo cacao, and the producing area of Carmelo cacao is preferably the United Mexican States.

### <Feature 2α>

L*, a*, and b* values of L*a*b* Color Space in the cacao bean processed product of the present invention are:
L*: preferably 42 or more and 55 or less, more preferably 43 or more and 53 or less, still more preferably 44 or more and 50 or less;
a*: preferably 3.0 or more and 7.0 or less, more preferably 3.5 or more and 6.5 or less, still more preferably 4.0 or more and 6.0 or less; and
b*: preferably 9.0 or more and 15.0 or less, more preferably 10.0 or more and 14.0 or less, still more preferably 11.0 or more and 13.0 or less, respectively. This feature is referred to as "Feature 2a".

"L*a*b* Color Space" is a color space that has been standardized by CIE (International Commission on Illumination) and is employed in JIS Z 8781-4: 2013. In L*a*b* Color Space, brightness is represented by L*, and chromaticity is represented by a* and b*.

Measurement of L*, a*, and b* values can be performed according to a method described in the Examples with the cacao bean processed product of the present invention as a sample.

### <Feature 3α>

The amount of γ-aminobutyric acid in the cacao bean processed product of the present invention is preferably 200 µg/g or less, more preferably 150 µg/g or less, and still more preferably 100 µg/g or less on the basis of the mass of the cacao bean processed product of the present invention. This feature is referred to as "Feature 3a". The term "µg/g" means the amount (µg) of γ-aminobutyric acid per 1 g of the cacao bean processed product of the present invention.

Feature 3α indicates that the amount of γ-aminobutyric acid in the cacao bean processed product of the present invention is smaller than those in cacao bean processed products obtained by processing conventional unfermented cacao beans or fermented cacao beans.

γ-Aminobutyric acid causes bitter taste. Accordingly, Feature 3α indicates that the γ-aminobutyric acid-derived bitter taste of the cacao bean processed product of the present invention is weaker than those of cacao bean processed products obtained by processing conventional unfermented cacao beans or fermented cacao beans.

The lower limit of the amount of γ-aminobutyric acid in the cacao bean processed product of the present invention is not limited. The amount of γ-aminobutyric acid in the cacao bean processed product of the present invention may be, for example, 0 µg/g or more, or 10 µg/g or more, or 50 µg/g or more on the basis of the mass of the cacao bean processed product of the present invention. Each of these lower limits may be combined with any of the above-described upper limits.

Measurement of the amount of γ-aminobutyric acid can be performed according to a method described in the Examples with the cacao bean processed product of the present invention as a sample.

### <Feature 4α>

In a state where the cacao bean processed product of the present invention has a median diameter of 7 µm or more and 8 µm or less and a water content of 3 % by mass or more and 4 % by mass or less, the cacao bean processed product of the present invention has a viscosity of preferably 10000 cP or less, more preferably 4500 cP or more and 9000 cP or less, still more preferably 4700 cP or more and 8500 cP or less, and still more preferably 5000 cP or more and 8000 cP or less. This feature is referred to as "Feature 4a".

Feature 4α indicates that the viscosity of the cacao bean processed product of the present invention is lower than those of cacao bean processed products obtained by processing conventional unfermented cacao beans. By virtue of this, in producing a food from the cacao bean processed product of the present invention as a material, lowering of food production efficiency (e.g., deteriorated liquid delivery, the occurrence of the loss of the material for the food) can be prevented.

Measurement of the median diameter, the water content, and the viscosity can be performed according to methods described in the Examples with the cacao bean processed product of the present invention as a sample.

The median diameter (D₅₀) of the cacao bean processed product of the present invention is a particle diameter at which a cumulative volume of 50% is reached in the volume-based particle size distribution of the cacao bean processed product of the present invention as determined according to a laser diffraction particle size measurement method.

### <Method for Producing Cacao Bean Processed Product>

The cacao bean processed product of the present invention can be produced by processing a microwave heat treated cacao bean produced according to the following method.

The method for producing a microwave heat treated cacao bean includes the steps of:
(a) providing a cacao pod content containing a cacao bean, in an unfermented state; and
(b) performing a microwave heat treatment on the cacao pod content provided in the step (a) to obtain a microwave heat treated cacao bean.

### <Step (a)>

The step (a) is a step of providing a cacao pod content containing a cacao bean, in an unfermented state.

Examples of the cacao variety from which the cacao pod content is derived include the varieties Criollo, Forastero, and Trinitario. The cacao variety from which the cacao pod content is derived is preferably the variety Criollo, and more preferably the variety Carmelo. The variety Carmelo is a kind of the variety Criollo. The endosperm of a cacao bean of Carmelo cacao is white. The producing area of Carmelo cacao is preferably the United Mexican States.

A cacao pod (fruit of cacao) has a hard pericarp, and a cacao bean (seed) is contained in a white flesh (pulp) inside the pericarp. A cacao bean has a hull (shell or husk), and an endosperm (nib) and an embryo (germ) are contained in the hull.

The cacao pod content containing a cacao bean can be obtained by breaking a cacao pod mechanically or by hand to open the cacao pod and taking out a cacao bean together with a pulp. The cacao pod content containing a cacao bean may contain a pulp in addition to the cacao bean, and the cacao bean may include a shell.

It is preferable for the cacao pod content containing a cacao bean to contain a pulp in addition to the cacao bean. The present inventors have concluded that a microwave heat treated cacao bean having one or more of Features 1β to 8β described later can be efficiently produced by, in the step (a), providing a cacao pod content containing a cacao bean and a pulp in an unfermented state, and, in the step (b), performing a microwave heat treatment on the cacao pod content provided in the step (a). It is preferable for the microwave heat treated cacao bean having one or more of Features 1β to 8β described later to have at least Feature 1β. The cacao pod content containing a cacao bean and a pulp may include a shell. The cacao variety from which the pulp contained in the cacao pod content is derived may be different from that from which the cacao bean contained in the cacao pod content is derived, but is typically the same.

In the conventional, typical process, after harvesting cacao pods, cacao beans are taken out of the cacao pods, and the cacao beans taken out are fermented and dried. The fermentation is a process involving enzymatic or metabolic decomposition of organic substances by microorganisms, and may involve either one of an anaerobic process and an aerobic process, or both an anaerobic process and an aerobic process. Through the fermentation, sugars in cacao beans are decomposed to generate alcohol, and the generated alcohol is converted into acetic acid. The fermentation can be performed, for example, by leaving cacao beans, which have been placed in a box, as they are or with stirring as necessary, while the temperature is kept at 30 to 60°C for 3 to 7 days.

In contrast to the conventional, typical process, the cacao pod content containing a cacao bean is provided in an unfermented state in the step (a).

The expression "unfermented" is an expression relating to the degree of fermentation of a cacao bean. The degree of fermentation can be indicated by a fermentation index (Shamsuddin SB and Dimick PS, Qualitative and quantitative measurements of cacao bean fermentation, in Proceedings of Cocoa Biotechnology, ed. by Dimick PS, Department of Food Science, Penn State University, University Park, PA, pp. 55-78 (1986)). The fermentation index of the "unfermented state" in the present invention is typically less than 0.5.

The fermentation may occur immediately after a cacao bean is taken out of a cacao pod. The expression "unfermented state" in the present invention encompasses a state where the fermentation has slightly occurred. For example, the state of a cacao bean kept in a situation that allows the fermentation within 2 days (in particular, within 1 day) after the cacao bean was taken out of a cacao pod is encompassed in the expression "unfermented state" in the present invention.

### <Step (b)>

The step (b) is a step of performing a microwave heat treatment on the cacao pod content provided in the step (a) to obtain a microwave heat treated cacao bean.

The microwave heat treatment is performed to give the cacao bean a surface temperature preferably of 75°C or more and 120°C or less, more preferably of 80°C or more and 115°C or less, more preferably of 83°C or more and 110°C or less and/or to give the cacao bean a core temperature preferably of 75°C or more and 95°C or less, more preferably of 80°C or more and 90°C or less, more preferably of 83°C or more and 85°C or less. From the viewpoint of effectively preventing the browning of the endosperm of the cacao bean, it is preferable that at least one of the surface temperature and the core temperature of the cacao bean fall within the above-described range, and it is more preferable that both of them fall within the above-described ranges. The microwave heat treatment may be performed under increased pressure or under reduced pressure, but is typically performed under normal pressure. The expression "normal pressure" means a pressure in a state where neither pressurization nor depressurization is performed, and normally means 101.3 kPa. The surface temperature of the cacao bean can be measured according to a conventional non-contact method, and the core temperature of the cacao bean can be measured according to a conventional contact method.

The microwave heat treatment can be performed using a microwave oven. The output of the microwave oven is preferably 300 W or more and 6000 W or less, more preferably 400 W or more and 3000 W or less, and still more preferably 500 W or more and 1500 W or less. The time of heating with the microwave oven can be appropriately adjusted according to the mass of the cacao pod content to be heated. If the mass of the cacao pod content to be heated is 200 g, for example, then the time of heating with the microwave oven is preferably 0.5 minutes or more and 50 minutes or less, more preferably 1 minute or more and 30 minutes or less, and still more preferably 2 minutes or more and 15 minutes or less. In an embodiment, the mass of the cacao pod content to be heated is 200 g, the output of the microwave oven is 1500 W, and the time of heating with the microwave oven is 2 minutes. In another embodiment, the mass of the cacao pod content to be heated is 200 g, the output of the microwave oven is 1350 W, and the time of heating with the microwave oven is 3 minutes.

The microwave heat treatment may be performed on an individual cacao pod content. For example, after placing a cacao pod content in a container, the microwave heat treatment may be performed on the cacao pod content contained in the container. The microwave heat treatment may be performed with the container sealed, or with the container partially opened, or with the container opened.

The microwave heat treatment may be consecutively performed on a plurality of cacao pod contents. For example, the microwave heat treatment may be performed on a plurality of cacao pod contents consecutively conveyed by a conveyer.

In the case where the cacao pod content provided in the step (a) contains a pulp in addition to the cacao bean, the microwave heat treatment may be performed in a state where the cacao bean and the pulp are not contacted with each other in the step (b), but is preferably performed in a state where the cacao bean and the pulp are contacted with each other. The present inventors have concluded that a microwave heat treated cacao bean having one or more of Features 1β to 8β described later can efficiently obtained by performing the microwave heat treatment in a state where the cacao bean and the pulp are contacted with each other. It is preferable for the microwave heat treated cacao bean having one or more of Features 1β to 8β described later to have at least Feature 1β.

In the step (b), a drying treatment may be performed after the microwave heat treatment to obtain the microwave heat treated cacao bean. The drying treatment can be performed according to a conventional method. For example, the drying treatment can be performed in the sun. The drying treatment is preferably performed until the water content of the microwave heat treated cacao bean reaches, for example, 0 to 12 % by mass, preferably 4 to 8 % by mass, more preferably 6 to 7 % by mass on the basis of the mass of the microwave heat treated cacao bean. Measurement of the water content can be performed in the same manner as in "Measurement of Water Content" in "(4) Evaluation of Cacao Mass" in Example 1 described later, except that the microwave heat treated cacao bean is used as a sample.

In the case where the cacao pod content provided in the step (a) contains a pulp in addition to the cacao bean, it is preferable to remove the pulp from the cacao pod content after the microwave heat treatment to obtain the microwave heat treated cacao bean in the step (b). This operation results in improvement in the proportion of cacao-derived edible parts contained per predetermined weight (production yield).

In the case where the cacao pod content provided in the step (a) contains a pulp in addition to the cacao bean, it is acceptable to remove the pulp from the cacao pod content after the microwave heat treatment and subsequently perform a drying treatment to obtain the microwave heat treated cacao bean in the step (b). Description of the drying treatment is as shown above.

In the case where the cacao pod content provided in the step (a) contains a pulp in addition to the cacao bean, it is acceptable to perform a drying treatment after the microwave heat treatment without removal of the pulp from the cacao pod content, to obtain the microwave heat treated cacao bean in the step (b). Description of the drying treatment is as shown above.

In the case where the cacao pod content provided in the step (a) contains a pulp in addition to the cacao bean, it is acceptable to perform a pulverizing or grinding treatment after the microwave heat treatment without a drying treatment, to obtain the microwave heat treated cacao bean in the step (b). The pulverizing treatment and the grinding treatment can be each performed according to a conventional method. After performing the microwave heat treatment and then removing the pulp from the cacao pod content, the pulverizing or grinding treatment may be performed without performing a drying step. Alternatively, after performing the microwave heat treatment, the pulverizing or grinding treatment may be performed without removing the pulp from the cacao pod content and without performing a drying step.

It is preferable for the microwave heat treated cacao bean obtained in the step (b) to have one or more of Features 1β to 8β described later. It is preferable for the microwave heat treated cacao bean having one or more of Features 1β to 8β described later to have at least Feature 1β. From the viewpoint of achieving one or more of Features 1β to 8β described later, the cacao pod content provided in the step (a) is preferably a cacao pod content derived from Criollo cacao. The Criollo cacao is preferably Carmelo cacao. The producing area of the Carmelo cacao is preferably the United Mexican States.

### <Feature 1β>

L*, a*, and b* values of L*a*b* Color Space in the microwave heat treated cacao bean are:
L*: preferably 43 or more and 55 or less, more preferably 44 or more and 53 or less, still more preferably 45 or more and 52 or less;
a*: preferably 2.0 or more and 9.5 or less, more preferably 3.0 or more and 9.2 or less, still more preferably 4.0 or more and 9.0 or less; and
b*: preferably 7.0 or more and 23.5 or less, more preferably 8.0 or more and 23.0 or less, still more preferably 9.0 or more and 22.0 or less, respectively. This feature is referred to as "Feature 1β".

"L*a*b* Color Space" is a color space that has been standardized by CIE (International Commission on Illumination) and is employed in JIS Z 8781-4: 2013. In L*a*b* Color Space, brightness is represented by L*, and chromaticity is represented by a* and b*.

Measurement of L*, a*, and b* values can be performed according to a method described in the Examples with the microwave heat treated cacao bean as a sample.

Feature 1β indicates that the browning of the endosperm of the microwave heat treated cacao bean has been prevented. In the case where the cacao pod content provided in the step (a) is a cacao pod content derived from Criollo (in particular, Carmelo) cacao, Feature 1β indicates that the white color of the endosperm of the microwave heat treated cacao bean has been maintained (i.e., the browning of the endosperm of the microwave heat treated cacao bean has been prevented).

In addition, Feature 1β indicates that the amount of anthocyanin in the microwave heat treated cacao bean is small.

The amount of anthocyanin in the microwave heat treated cacao bean is preferably 0.40 mg/g or less, more preferably 0.38 mg/g or less, and still more preferably 0.36 mg/g or less on the basis of the mass of the microwave heat treated cacao bean. The term "mg/g" means the amount (mg) of anthocyanin per 1 g of the microwave heat treated cacao bean.

The lower limit of the amount of anthocyanin in the microwave heat treated cacao bean is not limited. The amount of anthocyanin in the microwave heat treated cacao bean may be, for example, 0 mg/g or more, or 0.01 mg/g or more, or 0.1 mg/g or more on the basis of the mass of the microwave heat treated cacao bean. Each of these lower limits may be combined with any of the the above-described upper limits.

Anthocyanin is a collective term for glycosides in which a sugar is bound to anthocyanidin, which has a skeleton represented by a formula (I):

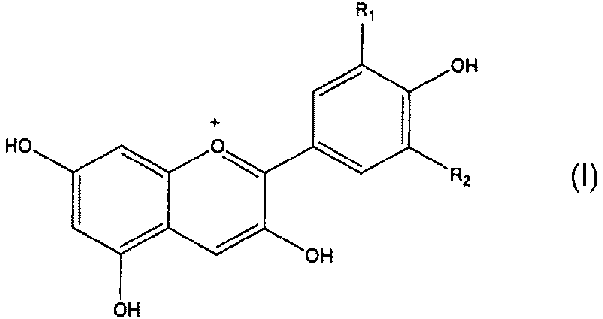

Examples of anthocyanidin as aglycone include cyanidin, delphinidin, pelargonidin, peonidin, petunidin, and malvidin.

For cyanidin, R₁ is OH and R₂ is H. For delphinidin, R₁ is OH and R₂ is OH. For pelargonidin, R₁ is H and R₂ is H. For peonidin, R₁ is OCH₃ and R₂ is H. For petunidin, R₁ is OCH₃ and R₂ is OH. For malvidin, R₁ is OCH₃ and R₂ is OCH₃.

Examples of the sugar to be bound to anthocyanidin include monosaccharides such as glucose, galactose, and arabinose; and disaccharides such as rutinose and sophorose.

A method for measuring the amount of anthocyanin is as follows.

### [Method for Measuring Amount of Anthocyanin]

To 1 g of a sample, 9 mL of hexane is added, and the resultant is shaken at normal temperature for 30 minutes, and subsequently centrifuged (3000 rpm, 10 minutes, 4°C) to discard the supernatant. After these operations are performed twice in total, the hexane is removed (degreased) by storing in a fume hood. To the degreased sample, 50 mL of 50% methanol is added, and the resultant is heated to reflux (60 minutes, 83°C), and subsequently centrifuged (3000 rpm, 10 minutes, 23°C) to give an extract. These operations are performed twice, and extracts given through the operations are combined to give 100 mL of an extract. With the obtained extract, measurement of the amount of anthocyanin is performed by HPLC. Using authentic samples of cyanidin 3-O-β-D-galactopyranoside chloride (manufactured by FUJIFILM Wako Pure Chemical Corporation) and cyanidin-3-O-arabinoside chloride (manufactured by Funakoshi Co., Ltd.), the amount of anthocyanin is calculated as the total amount of the two components. Upon HPLC, the obtained extract is filtered through a 0.45-µL filter, and the resultant is used as a sample for the HPLC. Measurement conditions for the HPLC are as shown below. "ACN" means acetonitrile, and "TFA" means trifluoroacetic acid.

### <Measurement Conditions for HPLC>

Column: Develosil ODS-HG-5
Column temperature: 40°C
Mobile phase A: ultrapure water-TFA (ultrapure water:TFA = 100:0.1)
Mobile phase B: ACN-TFA (ACN:TFA = 100:0.1)
Flow rate: 0.8 mL/min
Detector: UV 520 nm
Gradient program:

**[Table A]**

| Time (min) | Mobile phase A (vol%) | Mobile phase B (vol%) |
|---|---|---|
| 0 - 5 | 90% | 10% |
| 5 - 35 | 90 - 75% | 10 - 25% |
| 35 - 40 | 75% | 25% |
| 40 - 45 | 0% | 100% |

### <Feature 2β>

The total amount of polyphenol in the microwave heat treated cacao bean is preferably 42 mg/g or more, more preferably 45 mg/g or more, and still more preferably 47 mg/g or more on the basis of the mass of the microwave heat treated cacao bean. This feature is referred to as "Feature 2β". The term "mg/g" means the total amount (mg) of polyphenol per 1 g of the microwave heat treated cacao bean.

Feature 2β indicates that the total amount of polyphenol in the microwave heat treated cacao bean is larger than that in a conventional fermented cacao bean. The microwave heat treatment causes the inactivation of enzymes present in the cacao bean, leading to the successful achievement of Feature 2β.

The upper limit of the total amount of polyphenol in the microwave heat treated cacao bean is not limited. The total amount of polyphenol in the microwave heat treated cacao bean may be, for example, 75 mg/g or less, or 70 mg/g or less, or 65 mg/g or less on the basis of the mass of the microwave heat treated cacao bean. Each of these upper limits may be combined with any of the above-described lower limits.

The total amount of polyphenol in the microwave heat treated cacao bean is represented as quantity in terms of (-)-epicatechin.

Measurement of the total amount of polyphenol can be performed according to a Folin-Ciocalteu method with the microwave heat treated cacao bean as a sample. The Folin-Ciocalteu method is a method using a phenomenon that Folin's reagent is reduced by a phenolic hydroxy group to show blue color. For a method for measuring polyphenol contents by the Folin-Ciocalteu method, reference can be made to the appendix "Cacao Polyphenol Measurement Method" attached to "Labeling Standards for Cacao Polyphenol in Chocolates" by the Japanese Chocolate Industry Fair Trade Conference.

Examples of the polyphenol include anthocyanin, catechin, epicatechin, chlorogenic acid, gallic acid, procatechuic acid, procyanidin B2, procyanidin B5, procyanidin C1, cinnamtannin A2, and a polymer (dimer, trimer, tetramer, or polymer) of one or more of them.

It is preferable that Feature 2β is maintained even in the cacao bean processed product of the present invention obtained by processing the microwave heat treated cacao bean. That is, the total amount of polyphenol in the cacao bean processed product of the present invention is preferably 42 mg/g or more, more preferably 45 mg/g or more, and still more preferably 47 mg/g or more on the basis of the mass of the cacao bean processed product of the present invention. The upper limit of the total amount of polyphenol in the cacao bean processed product of the present invention is not limited. The total amount of polyphenol in the cacao bean processed product of the present invention may be, for example, 75 mg/g or less, or 70 mg/g or less, or 65 mg/g or less on the basis of the mass of the cacao bean processed product of the present invention. Each of these upper limits may be combined with any of the above-described lower limits.

### <Feature 3β>

The amount of procyanidin in the microwave heat treated cacao bean is preferably 15 mg/g or more, more preferably 20 mg/g or more, and still more preferably 25 mg/g or more on the basis of the mass of the microwave heat treated cacao bean. This feature is referred to as "Feature 3β". The term "mg/g" means the amount (mg) of procyanidin per 1 g of the microwave heat treated cacao bean.

Feature 3β indicates that the amount of procyanidin in the microwave heat treated cacao bean is larger than that in a conventional fermented cacao bean. The microwave heat treatment causes the inactivation of enzymes present in the cacao bean, leading to the successful achievement of Feature 3β.

The upper limit of the amount of procyanidin in the microwave heat treated cacao bean is not limited. The amount of procyanidin in the microwave heat treated cacao bean may be, for example, 50 mg/g or less, or 45 mg/g or less, or 40 mg/g or less on the basis of the mass of the microwave heat treated cacao bean. Each of these upper limits may be combined with any of the above-described lower limits.

The amount of procyanidin is the total amount of six procyanidins consisting of (+)-catechin, (-)-epicatechin, procyanidin B2 (dimer), procyanidin B5 (dimer), procyanidin C1 (trimer), and cinnamtannin A2 (tetramer), and represented as quantity in terms of (-)-epicatechin.

Measurement of the amount of procyanidin can be performed according to a method described in the Examples with the microwave heat treated cacao bean as a sample.

It is preferable that Feature 3β is maintained even in the cacao bean processed product of the present invention obtained by processing the microwave heat treated cacao bean. That is, the amount of procyanidin in the cacao bean processed product of the present invention is preferably 15 mg/g or more, more preferably 20 mg/g or more, and still more preferably 25 mg/g or more on the basis of the mass of the cacao bean processed product of the present invention. The upper limit of the amount of procyanidin in the cacao bean processed product of the present invention is not limited. The amount of procyanidin in the cacao bean processed product of the present invention may be, for example, 50 mg/g or less, or 45 mg/g or less, or 40 mg/g or less on the basis of the mass of the cacao bean processed product of the present invention. Each of these upper limits may be combined with any of the above-described lower limits.

### <Feature 4β>

The amount of theobromine in the microwave heat treated cacao bean is preferably 11.5 mg/g or less, more preferably 11.2 mg/g or less, and still more preferably 11.0 mg/g or less on the basis of the mass of the microwave heat treated cacao bean. This feature is referred to as "Feature 4β". The term "mg/g" means the amount (mg) of theobromine per 1 g of the microwave heat treated cacao bean.

Feature 4β indicates that the amount of theobromine in the microwave heat treated cacao bean is smaller than that in a conventional unfermented cacao bean.

Theobromine causes bitter taste. Accordingly, Feature 4β indicates that the theobromine-derived bitter taste of the microwave heat treated cacao bean is weaker than that of a conventional unfermented cacao bean.

The lower limit of the amount of theobromine in the microwave heat treated cacao bean is not limited. The amount of theobromine in the microwave heat treated cacao bean may be, for example, 4.0 mg/g or more, or 5.0 mg/g or more, or 6.0 mg/g or more on the basis of the mass of the microwave heat treated cacao bean. Each of these lower limits may be combined with any of the above-described upper limits.

Measurement of the amount of theobromine can be performed according to a method described in the Examples with the microwave heat treated cacao bean as a sample.

It is preferable that Feature 4β is maintained even in the cacao bean processed product of the present invention obtained by processing the microwave heat treated cacao bean. That is, the amount of theobromine in the cacao bean processed product of the present invention is preferably 11.5 mg/g or less, more preferably 11.2 mg/g or less, and still more preferably 11.0 mg/g or less on the basis of the mass of the cacao bean processed product of the present invention. The lower limit of the amount of theobromine in the cacao bean processed product of the present invention is not limited. The amount of theobromine in the cacao bean processed product of the present invention may be, for example, 4.0 mg/g or more, or 5.0 mg/g or more, or 6.0 mg/g or more on the basis of the mass of the cacao bean processed product of the present invention. Each of these lower limits may be combined with any of the above-described upper limits.

### <Feature 5β>

The amount of caffeine in the microwave heat treated cacao bean is preferably 5.0 mg/g or less, more preferably 4.5 mg/g or less, and still more preferably 4.2 mg/g or less on the basis of the mass of the microwave heat treated cacao bean. This feature is referred to as "Feature 5β". The term "mg/g" means the amount (mg) of caffeine per 1 g of the microwave heat treated cacao bean.

Feature 5β indicates that the amount of caffeine in the microwave heat treated cacao bean is smaller than that in a conventional unfermented cacao bean.

Caffeine causes bitter taste. Accordingly, Feature 5β indicates that the caffeine-derived bitter taste of the microwave heat treated cacao bean is weaker than that of a conventional unfermented cacao bean.

The lower limit of the amount of caffeine in the microwave heat treated cacao bean is not limited. The amount of caffeine in the microwave heat treated cacao bean may be, for example, 3.0 mg/g or more, or 3.5 mg/g or more, or 4.0 mg/g or more on the basis of the mass of the microwave heat treated cacao bean. Each of these lower limits may be combined with any of the above-described upper limits.

Measurement of the amount of caffeine can be performed according to a method described in the Examples with the microwave heat treated cacao bean as a sample.

It is preferable that Feature 5β is maintained even in the cacao bean processed product of the present invention obtained by processing the microwave heat treated cacao bean. That is, the amount of caffeine in the cacao bean processed product of the present invention is preferably 5.0 mg/g or less, more preferably 4.5 mg/g or less, and still more preferably 4.2 mg/g or less on the basis of the mass of the cacao bean processed product of the present invention. The lower limit of the amount of caffeine in the cacao bean processed product of the present invention is not limited. The amount of caffeine in the cacao bean processed product of the present invention may be, for example, 3.0 mg/g or more, or 3.5 mg/g or more, or 4.0 mg/g or more on the basis of the mass of the cacao bean processed product of the present invention. Each of these lower limits may be combined with any of the above-described upper limits.

### <Feature 6β>

The amount of γ-aminobutyric acid in the microwave heat treated cacao bean is preferably 200 µg/g or less, more preferably 150 µg/g or less, and still more preferably 100 µg/g or less on the basis of the mass of the microwave heat treated cacao bean. This feature is referred to as "Feature 6β". The term "µg/g" means the amount (µg) of γ-aminobutyric acid per 1 g of the microwave heat treated cacao bean.

Feature 6β indicates that the amount of γ-aminobutyric acid in the microwave heat treated cacao bean is smaller than that in a conventional unfermented or fermented cacao bean.

γ-Aminobutyric acid causes bitter taste. Accordingly, Feature 6β indicates that the γ-aminobutyric-acid-derived bitter taste of the microwave heat treated cacao bean is weaker than that of a conventional unfermented or fermented cacao bean.

The lower limit of the amount of γ-aminobutyric acid in the microwave heat treated cacao bean is not limited. The amount of γ-aminobutyric acid in the microwave heat treated cacao bean may be, for example, 0 µg/g or more, or 10 µg/g or more, or 50 µg/g or more on the basis of the mass of the microwave heat treated cacao bean. Each of these lower limits may be combined with any of the above-described upper limits.

Measurement of the amount of γ-aminobutyric acid can be performed according to a method described in the Examples with the microwave heat treated cacao bean as a sample.

It is preferable that Feature 6β is maintained even in the cacao bean processed product of the present invention obtained by processing the microwave heat treated cacao bean. That is, the amount of γ-aminobutyric acid in the cacao bean processed product of the present invention is preferably 200 µg/g or less, more preferably 150 µg/g or less, and still more preferably 100 µg/g or less on the basis of the mass of the cacao bean processed product of the present invention. The lower limit of the amount of γ-aminobutyric acid in the cacao bean processed product of the present invention is not limited. The amount of γ-aminobutyric acid in the cacao bean processed product of the present invention may be, for example, 0 µg/g or more, or 10 µg/g or more, or 50 µg/g or more on the basis of the mass of the cacao bean processed product of the present invention. Each of these lower limits may be combined with any of the above-described upper limits.

### <Feature 7β>

The amount of sucrose in the microwave heat treated cacao bean is preferably 15 mg/g or more, more preferably 17 mg/g or more, and still more preferably 18 mg/g or more on the basis of the mass of the microwave heat treated cacao bean. This feature is referred to as "Feature 7β". The term "mg/g" means the amount (mg) of sucrose per 1 g of the microwave heat treated cacao bean.

Feature 7β indicates that the amount of sucrose in the microwave heat treated cacao bean is larger than that in a conventional unfermented or fermented cacao bean.

Sucrose causes sweet taste. Accordingly, Feature 7β indicates that the sucrose-derived sweet taste of the microwave heat treated cacao bean is stronger than that of a conventional unfermented or fermented cacao bean. The microwave heat treatment causes the inactivation of enzymes present in the cacao bean to prevent the decomposition of the disaccharide sucrose. In addition, the microwave heat treatment kills microorganisms that assimilate sucrose such as yeasts. Thereby, Feature 7β is successfully achieved.

The upper limit of the amount of sucrose in the microwave heat treated cacao bean is not limited. The amount of sucrose in the microwave heat treated cacao bean may be, for example, 35 mg/g or less, or 30 mg/g or less, or 25 mg/g or less on the basis of the mass of the microwave heat treated cacao bean. Each of these upper limits may be combined with any of the above-described lower limits.

Measurement of the amount of sucrose can be performed according to a method described in the Examples with the microwave heat treated cacao bean as a sample.

It is preferable that Feature 7β is maintained even in the cacao bean processed product of the present invention obtained by processing the microwave heat treated cacao bean. That is, the amount of sucrose in the cacao bean processed product of the present invention is preferably 15 mg/g or more, more preferably 17 mg/g or more, and still more preferably 18 mg/g or more on the basis of the mass of the cacao bean processed product of the present invention. The upper limit of the amount of sucrose in the cacao bean processed product of the present invention is not limited. The amount of sucrose in the cacao bean processed product of the present invention may be, for example, 35 mg/g or less, or 30 mg/g or less, or 25 mg/g or less on the basis of the mass of the cacao bean processed product of the present invention. Each of these upper limits may be combined with any of the above-described lower limits.

### <Feature 8β>

The total amount of amino acids in the microwave heat treated cacao bean is preferably 2400 µg/g or less, more preferably 2300 µg/g or less, and still more preferably 2250 µg/g or less on the basis of the mass of the microwave heat treated cacao bean. This feature is referred to as "Feature 8β". The term "µg/g" means the total amount (µg) of amino acids per 1 g of the microwave heat treated cacao bean.

Feature 8β indicates that the total amount of amino acids in the microwave heat treated cacao bean is smaller than that in a conventional unfermented or fermented cacao bean.

The microwave heat treatment causes the inactivation of enzymes present in the cacao bean to prevent the decomposition of proteins. Thereby, Feature 8β is successfully achieved.

Having a smaller total amount of amino acids than a conventional unfermented or fermented cacao bean, the microwave heat treated cacao bean having Feature 8β is less likely to undergo Maillard reaction between a reducing sugar and an amino acid, and thus the browning of the endosperm of the cacao bean is less likely to occur.

The lower limit of the total amount of amino acids in the microwave heat treated cacao bean is not limited. The total amount of amino acids in the microwave heat treated cacao bean may be, for example, 1950 µg/g or more, or 2000 µg/g or more, or 2100 µg/g or more on the basis of the mass of the microwave heat treated cacao bean. Each of these lower limits may be combined with any of the above-described upper limits.

The total amount of amino acids in the microwave heat treated cacao bean is the total amount of 20 amino acids constituting proteins (Asp, Thr, Ser, Asn, Glu, Gln, Gly, Ala, Val, Cys, Met, Ile, Leu, Tyr, Phe, Trp, Lys, His, Arg, and Pro).

Measurement of the total amount of amino acids can be performed according to a method described in the Examples with the microwave heat treated cacao bean as a sample.

It is preferable that Feature 8β is maintained even in the cacao bean processed product of the present invention obtained by processing the microwave heat treated cacao bean. That is, the total amount of amino acids in the cacao bean processed product of the present invention is preferably 2400 µg/g or less, more preferably 2300 µg/g or less, and still more preferably 2250 µg/g or less on the basis of the mass of the cacao bean processed product of the present invention. The lower limit of the total amount of amino acids in the cacao bean processed product of the present invention is not limited. The total amount of amino acids in the cacao bean processed product of the present invention may be, for example, 1950 µg/g or more, or 2000 µg/g or more, or 2100 µg/g or more on the basis of the mass of the cacao bean processed product of the present invention. Each of these lower limits may be combined with any of the above-described upper limits.

The microwave heat treated cacao bean obtained by the above-described production method encompasses not only the microwave heat treated cacao bean obtained in the step (b), but also a product obtained by subjecting the microwave heat treated cacao bean obtained in the step (b) to one or more treatments selected from a pulverizing treatment, a grinding treatment, a drying treatment, a sterilizing treatment, and a roasting treatment. The pulverizing treatment, grinding treatment, drying treatment, sterilizing treatment, and roasting treatment can be each performed according to a conventional method. However, the microwave heat treated cacao bean obtained by the above-described production method does not encompass cacao bean processed products at any phases no earlier than production of a cacao nib (e.g., cacao nib, cacao mass, cocoa butter, cocoa cake, cocoa powder, and the like).

Processing of the microwave heat treated cacao bean obtained according to the above-described production method can be performed according to a conventional method depending on the type of a cacao bean processed product to be produced. For example, a cacao mass can be obtained as follows: First, a cacao nib is obtained by performing a shelling treatment and a roasting treatment on the microwave heat treated cacao bean obtained in the step (b). A sterilizing treatment may be performed on the microwave heat treated cacao bean obtained in the step (b) before performing the shelling treatment and the roasting treatment. The sterilizing treatment can be performed according to a method known as a common sterilizing method for a cacao bean. The shelling treatment may be performed before or after the roasting treatment. The shelling treatment can be performed according to a conventional method using a separator. Through the shelling treatment, the cacao bean is pulverized and the hull is removed. The roasting treatment can be performed according to a conventional method using a roaster. The roasting treatment can be performed to give a product temperature of 100°C or more and 160°C or less, for example. Subsequently, the cacao nib is subjected to a grinding treatment to give a cacao mass. The grinding treatment can be performed according to a conventional method using a grinder or a refiner. The grinding treatment may be performed after mixing a plurality of kinds of cacao nibs with a blender.

### < < Material Composition for Food> >

An aspect of the present invention relates to a material composition for a food.

The material composition for a food of the present invention contains the cacao bean processed product of the present invention. The material composition for a food of the present invention allows a food with enhanced taste like milk to be produced without significantly enhancing at least one of bean odor, grassy odor, and sour taste.

The material composition for a food of the present invention may contain one or more additional components applicable as a material for a food in addition to the cacao bean processed product of the present invention. Additional components can be appropriately selected, depending on a food to be produced. Examples of the additional components include water, sugars, sugar alcohols, starch, modified starch, dietary fiber, milk, processed milk, soy milk, fruit juices, vegetable juices, fruits or processed products thereof, vegetables or processed products thereof, proteins, peptides, amino acids, animal extracts, plant or herbal extracts, polymers of natural origin (e.g., collagen, hyaluronan, chondroitin), vitamins, minerals, sweeteners, thickeners, emulsifying agents, preservatives, coloring agents, stabilizers, and fragrances.

### <<Food>>

An aspect of the present invention relates to a food.

The food of the present invention contains the material composition for a food of the present invention. The food of the present invention has enhanced taste like milk without significant enhancement of at least one of bean odor, grassy odor, and sour taste.

The food of the present invention may be in any category without limitation. The food of the present invention may be, for example, a health food, a nutritional supplement, a functional food, a food with health claims (e.g., a food for specified health uses, a food with nutrient function claims, a food with functional claims), or a food for special dietary uses (e.g., a food for infants, a food for expectant mothers, a food for elderlies, a food for patients).

The food of the present invention may be in any form without limitation. Examples of the form of the food of the present invention include the forms of solid, paste, semiliquid, gel, and liquid.

The food of the present invention can be selected from, for example, beverages, frozen desserts, and oily confectioneries.

Examples of the beverages include fermented milk (drink yogurt, set yogurt, soft yogurt, cheese, etc.), lactic acid bacteria beverages, milk beverages (coffee milk, fruit milk, etc.), tea beverages (green tea, tea, oolong tea, etc.), fruit or vegetable beverages (beverages containing fruit juice of oranges, apples, grapes, etc., and vegetable juice of tomatoes, carrots, etc.), plant-based milk (soy milk, oat milk, rice milk, almond milk, coconut milk, etc.), alcoholic beverages (beer, low-malt beer, wine, etc.), carbonated beverages, refreshing beverages, and water-based beverages.

The oily confectioneries are foods produced by suspending a finely pulverized product of edible components (e.g., cocoa powder, sugars, milk solids) in a matrix consisting of a continuous phase of butter (e.g., cacao mass, cocoa butter). As necessary, an additive, a fragrance, or the like may be added. Examples of the oily confectioneries include chocolates, fat creams, and butter creams. The oily confectioneries are not limited to chocolates, semi-chocolates, and chocolate products as defined in the Fair Competition Code on Labeling of Chocolates, a rule arranged by the Japan Fair Trade Commission, and include all kinds of oily confectioneries not specified in the rule such as tempered and non-tempered fat creams and chocolates with a cacao butter alternative. Chocolate contains edible butter and a sugar as main materials. To the main materials, for example, a cacao component (cacao mass, cocoa powder, etc.), a dairy product, a fragrance, or an emulsifying agent is added, as necessary. Chocolate is produced through steps of chocolate production (all or some of a mixing step, a milling step, a conching step, a molding step, a cooling step, and other steps). The definition of chocolate encompasses not only dark chocolate and milk chocolate, but also white chocolate and colored chocolate.

The frozen desserts are confectionaries that are eaten in a frozen state, and the frozen state is a state of a confectionary such that the product temperature of the confectionary is 0°C or less.

The frozen desserts may include, for example, an ice cream, an ice milk, a lacto ice, or a frozen confection each defined in the "Fair Competition Code on Labeling of Ice Creams and Frozen Confections". The frozen desserts may include a frozen dessert (frozen confection) containing no dairy material (i.e., no milk solid). The frozen desserts may include a frozen dessert not included in those categories such as Western unbaked confectionaries that are distributed in a frozen state.

It is preferable for the food of the present invention to have Feature 1γ described later. From the viewpoint of achieving Feature 1γ described later, the cacao bean processed product of the present invention to be used as a material of the food of the present invention is preferably a material obtained by processing a cacao bean of Carmelo cacao, more preferably a cacao nib or a cacao mass obtained by processing a cacao bean of Carmelo cacao, and still more preferably a cacao mass obtained by processing a cacao bean of Carmelo cacao. From the same viewpoint, the producing area of Carmelo cacao is preferably the United Mexican States.

### <Feature 1γ>

It is preferable that the food of the present invention contains: acetone; and at least one selected from 2-methylbutanal and 3-methylbutanal, and the food of the present invention, when analyzed by solid phase microextraction-gas chromatography-mass spectrometry, satisfies at least one of the following (F) and (G):
(F) a ratio of a peak area of acetone to a peak area of 2-methylbutanal (hereinafter, referred to as "ratio R6") is 0.25 or more; and
(G) a ratio of a peak area of acetone to a peak area of 3-methylbutanal (hereinafter, referred to as "ratio R7") is 0.50 or more.
This feature is referred to as "Feature 1γ".

In particular, if the food of the present invention is a beverage, it is preferable for the food of the present invention to have Feature 1γ.

The food of the present invention contains at least acetone and 2-methylbutanal if satisfying (F), and contains at least acetone and 3-methylbutanal if satisfying (G).

The food of the present invention may contain both of 2-methylbutanal and 3-methylbutanal. The food of the present invention may contain a component other than acetone, 2-methylbutanal, and 3-methylbutanal.

It is preferable that the food of the present invention contains acetone, 2-methylbutanal and 3-methylbutanal, and the food of the present invention, when analyzed by solid phase microextraction-gas chromatography-mass spectrometry, satisfies both of (F) and (G).

Acetone serves as an indicator of taste like milk, 2-methylbutanal as an indicator of bean odor, and 3-methylbutanal as an indicator of bean odor.

The fact that the ratio R6 is 0.25 or more indicates that the food of the present invention has stronger taste like milk and weaker bean odor than a food obtained from a conventional cacao bean processed product as a material. From the viewpoint of achieving stronger taste like milk and weaker bean odor, the ratio R6 is preferably 0.26 or more, more preferably 0.27 or more, and still more preferably 0.30 or more. The upper limit of the ratio R6 is not limited. The ratio R6 may be, for example, 0.8 or less, or 0.6 or less, or 0.4 or less. Each of these upper limits may be combined with any of the above-describe lower limits.

The fact that the ratio R7 is 0.50 or more indicates that the food of the present invention has stronger taste like milk and weaker bean odor than a food obtained from a conventional cacao bean processed product as a material. From the viewpoint of achieving stronger taste like milk and weaker bean odor, the ratio R7 is preferably 0.52 or more, more preferably 0.55 or more, and still more preferably 0.57 or more. The upper limit of the ratio R7 is not limited. The ratio R7 may be, for example, 1.2 or less, or 1.0 or less, or 0.8 or less. Each of these upper limits may be combined with any of the above-described lower limits.

Analysis of the food of the present invention by solid phase microextraction-gas chromatography-mass spectrometry (SPME-GC/MS) can be performed according to a method described in the Examples with the food of the present invention as a sample.

### EXAMPLES

### [Example 1]

### (1) Preparation of Unfermented Cacao Beans Subjected to Microwave Oven Treatment

Baba (raw cacao beans with pulps) was taken out of pods of Carmelo cacao from the United Mexican States. A 200-g portion of the baba taken out was divided and placed in zippered plastic bags, and heated using a microwave oven (WM1211D manufactured by Whirpool (1350 W, 50 Hz)) for 3 minutes. In the microwave oven treatment, the zippers were partially opened. The baba subjected to the microwave oven treatment was taken out of each bag, and placed in the sun without removal of the pulp and dried until the water content reached 6 to 7 % by mass. Thus, unfermented cacao beans subjected to microwave oven treatment were obtained.

### (2) Evaluation of Cacao Beans

### [Measurement of L*, a*, and b* Values of L*a*b* Color Space]

The cacao beans obtained in (1) were used as a sample. The sample was pulverized with a roll. The resulting pulverized product was placed in a container, melted with a hot-water bath at 55°C for 10 minutes, and subsequently molded with a chocolate mold without pattern. After the resulting molded product was released from the chocolate mold, the L*, a*, and b* values of L*a*b* Color Space on a surface of the molded product, the surface having been in contact with the chocolate mold, were measured three times, and the mean value was determined. Table 1 shows the measurement results. Each value in Table 1 is a mean value from three measurements.

The measurement of L*, a*, and b* values was performed using the colorimeter CR-400 manufactured by KONICA MINOLTA, INC. by an SCI method in accordance with spectrophotometric colorimetry and geometric conditions "c" described in JIS Z8722: 2009. The SCI method is a method of measurement based on entire reflected light (including a regular reflected light).

### [Measurement of Total Amount of Polyphenol, Amount of Procyanidin, Amount of Theobromine, and Amount of Caffeine]

The cacao beans obtained in (1) were used as a sample. To 1 g of the sample, 9 mL of hexane was added, and the resultant was shaken at normal temperature for 30 minutes, and subsequently centrifuged (3000 rpm, 10 minutes, 4°C) to discard the supernatant. After these operations were performed twice in total, the hexane was removed (degreased) by storing in a fume hood.

To the degreased sample, 50 mL of 50% methanol was added, and the resultant was heated to reflux (60 minutes, 83°C), and subsequently centrifuged (3000 rpm, 10 minutes, 23°C) to give an extract. These operations were performed twice, and extracts given through the operations were combined to give 100 mL of an extract. With the obtained extract, measurements of the total amount of polyphenol, the amount of procyanidin, the amount of theobromine, and the amount of caffeine were performed.

The measurement of the total amount of polyphenol was performed using the Folin-Ciocalteu method. Table 2 shows the measurement results. The total amount of polyphenol is represented as quantity in terms of (-)-epicatechin.

The measurements of the amount of procyanidin, the amount of theobromine, and the amount of caffeine were performed using HPLC. Table 2 shows the measurement results. The amount of procyanidin is the total amount of (+)-catechin, procyanidin B2 (dimer), (-)-epicatechin, procyanidin C1 (trimer), cinnamtannin A2 (tetramer), and procyanidin B5 (dimer), and represented as quantity in terms of (-)-epicatechin (epicatechin equivalent).

Upon HPLC, the obtained extract was filtered through a 0.45-µL filter and the resultant was used as a sample for the HPLC. Measurement conditions for the HPLC were as shown below. "ACN" refers to acetonitrile, and "TFA" refers to trifluoroacetic acid.

### <Measurement Conditions for HPLC>

Column: Develosil ODS-HG-5
Column temperature: 40°C
Mobile phase A: ultrapure water-TFA (ultrapure water:TFA = 100:0.1)
Mobile phase B: ACN-TFA (ACN:TFA = 100:0.1)
Flow rate: 0.8 mL/min
Detector: UV 280 nm
Gradient program:

**[Table B]**

| Time (min) | Mobile phase A (vol%) | Mobile phase B (vol%) |
|---|---|---|
| 0 - 5 | 90% | 10% |
| 5 - 35 | 90 - 75% | 10 - 25% |
| 35 - 40 | 75% | 25% |
| 40 - 45 | 0% | 100% |

### [Measurement of Amount of γ-Aminobutyric Acid (GABA)]

The cacao beans obtained in (1) were used as a sample. To 5 g of the sample, 30 mL of hexane was added, and the resultant was shaken at normal temperature for 20 minutes, and then centrifuged (3000 rpm, 15 minutes, 4°C) to discard the supernatant. After these operations were performed twice in total, the hexane was removed (degreased) by storing in a fume hood.

To the degreased sample, 25 mL of 80% ethanol was added, the resultant was shaken at normal temperature for 60 minutes and subsequently centrifuged (1000 g, 15 minutes, 23°C), and the supernatant was transferred into a 50-mL volumetric flask. After these operations were performed twice, the volumetric flask was filled up with 80% ethanol to provide 50 mL of an extract. The obtained extract was further 2-fold diluted with 0.02 N hydrochloric acid, and measurement of the amount of γ-aminobutyric acid was performed for the diluted solution. Table 3 shows the measurement results.

The measurement of the amount of γ-aminobutyric acid was performed by a post-column derivatization method using a full-automatic amino acid analyzer (L-8800 manufactured by Hitachi High-Technologies Corporation).

### [Measurement of Total Amount of Amino Acids]

The cacao beans obtained in (1) were used as a sample. To 5 g of the sample, 30 mL of hexane was added, and the resultant was shaken at normal temperature for 20 minutes, and subsequently centrifuged (3000 rpm, 15 minutes, 4°C) to discard the supernatant. After these operations were performed twice in total, the hexane was removed (degreased) by storing in a fume hood.

To the degreased sample, 25 mL of 80% ethanol was added, the resultant was shaken at normal temperature for 60 minutes and subsequently centrifuged (1000 g, 15 minutes, 23°C), and the supernatant was transferred into a 50-mL volumetric flask. After these operations were performed twice, the volumetric flask was filled up with 80% ethanol to provide 50 mL of an extract.

The obtained extract was further 2-fold diluted with 0.02 N hydrochloric acid, and measurement of the total amount of amino acids was performed for the diluted solution. Table 4 shows the measurement results. The total amount of amino acids is the total amount of 20 amino acids constituting proteins (Asp, Thr, Ser, Asn, Glu, Gln, Gly, Ala, Val, Cys, Met, Ile, Leu, Tyr, Phe, Trp, Lys, His, Arg, and Pro).

The measurement of the total amount of amino acids was performed by a post-column derivatization method using a full-automatic amino acid analyzer (L-8800 manufactured by Hitachi High-Technologies Corporation).

### [Measurement of Amount of Sucrose]

The cacao beans obtained in (1) were used as a sample. To 5 g of the sample, 30 mL of hexane was added, and the resultant was shaken at normal temperature for 20 minutes, and subsequently centrifuged (3000 rpm, 15 minutes, 4°C) to discard the supernatant. After these operations were performed twice in total, the hexane was removed (degreased) by storing in a fume hood.

To the degreased sample, 20 mL of 80% ethanol was added, and the resultant was shaken at normal temperature for 20 minutes, and subsequently the volumetric flask was filled up with 80% ethanol to 50 mL to provide 50 mL of an extract. With the obtained extract, the amount of sucrose was measured by HPLC. Table 5 shows the results.

Upon HPLC, the obtained extract was filtered through a 0.45-µL filter and the resultant was used as a sample for the HPLC. Measurement conditions for the HPLC were as shown below.

### <Measurement Conditions for HPLC>

Column: apHera NH2 Polymer (25 cm × 4.6 mm)
Column temperature: 40°C
Mobile phase A: ACN-water (ACN:water = 75:25)
Flow rate: 1.0 mL/min
Detector: RID

### (3) Preparation of Cacao Mass

400 g of the cacao beans obtained in (1) was roasted until a product temperature of 120°C was reached. The roasted Carmelo cacao was subjected to cut test, and purple beans were removed. Thereafter, the hull was removed to give cacao nibs. The obtained cacao nibs were pulverized with a roll to provide a cacao mass.

### (4) Evaluation of Cacao Mass

### [Measurement of Fragrance Components]

The cacao mass obtained in (3) was used as a sample. In a container, 10 g of the sample was placed and melted with a hot-water bath at 55°C for 10 minutes, and the container was then taken out of the hot-water bath and transferred to a normal-temperature environment, and the sample was mixed with addition of 100 µL of a solution of 1000 ppm MIBK (methyl isobutyl ketone) in methanol. After temperature control, a seed agent (Chocoseed A manufactured by FUJI OIL CO., LTD.) was added, and the resultant was stored in a refrigerator (4°C) for 60 minutes, giving a sample containing an internal standard.

The sample containing an internal standard was finely cut with a knife, and the cut pieces were classified through a 26-mesh sieve. A 0.2-g portion of the product under sieve was placed in a vial bottle, which was then sealed and left to stand at 37°C for 15 minutes. After the leaving, an SPME fiber (SPME Fiber Assembly 50/30 µm DVB/CAR/PDMS, Stableflex 24 Ga Autosampler, 3pk (Gray), manufactured by Supelco) was inserted into the vial bottle, which was then left to stand at 37°C for 30 minutes to allow the SPME fiber to adsorb fragrance components present in the sealed space in the vial bottle. The Stableflex is an SPME fiber assembly having a divinylbenzene/Carboxen/polydimethylsiloxane (DVB/CAR/PDMS) coating.

The fragrance components adsorbed by the SPME fiber were analyzed by gas chromatography-mass spectrometry. The conditions for the gas chromatography-mass spectrometry were as follows.

### <Conditions for Gas Chromatography>

Measuring apparatus: 6890 N manufactured by Agilent Technologies
Column: DB-WAX-UI manufactured by Agilent Technologies (length: 30 m, aperture: 0.25 mm, film thickness: 0.25 µm)
Injecting method: split-less
Carrier: He gas (gas flow rate: 1.0 mL/min)
Inlet temperature: 32°C
Temperature conditions: retention at 32°C for 5 minutes -> temperature elevation to 100°C at 3°C/min -> temperature elevation to 220°C at 20°C/min -> retention at 220°C for 15 minutes

### <Conditions for Mass Spectrometry>

Measuring apparatus: 5975 GC/MS manufactured by Agilent Technologies MS conditions: scan mode
Ionization method: EI (ionizing voltage: 1988 eV)
Scanning mass: m/z = 29 to 350
Ions for quantification:
   acetone m/z = 58
   2-methylbutanal m/z = 57.1
   3-methylbutanal m/z = 58.1
   hexanal m/z = 56.1
   acetic acid m/z = 60
   isopropyl alcohol m/z = 45.1

From the peak areas of acetone, 2-methylbutanal, 3-methylbutanal, hexanal, acetic acid, and isopropyl alcohol in the acquired chromatogram,
the ratio of the peak area of acetone to the peak area of 2-methylbutanal (peak area of acetone/peak area of 2-methylbutanal),
the ratio of the peak area of acetone to the peak area of 3-methylbutanal (peak area of acetone/peak area of 3-methylbutanal),
the ratio of the peak area of acetone to the peak area of hexanal (peak area of acetone/peak area of hexanal),
the ratio of the peak area of acetone to the peak area of acetic acid (peak area of acetone/peak area of acetic acid), and
the ratio of the peak area of acetone to the peak area of isopropyl alcohol (peak area of acetone/peak area of isopropyl alcohol)
were determined. Identification of the fragrance components was performed by comparing with data included in a database from Agilent Technologies. Table 6 shows the measurement results.

The measurement of the peak areas was performed using analysis software (MSD ChemStation) attached to the measuring apparatus.

### [Measurement of L*, a*, and b* Values of L*a*b* Color Space]

The cacao mass obtained in (3) was used as a sample. The sample was placed in a container, melted with a hot-water bath at 50°C for 10 minutes, and then molded with a chocolate mold without pattern. After the resulting molded product was released from the chocolate mold, the L*, a*, and b* values of L*a*b* Color Space on a surface of the molded product, the surface having been in contact with the chocolate mold, were measured three times, and the mean value was determined. Table 7 shows the measurement results. Each value in Table 7 is a mean value from three measurements.

The measurement of L*, a*, and b* values was performed using the colorimeter CR-400 manufactured by KONICA MINOLTA, INC. by an SCI method in accordance with spectrophotometric colorimetry and geometric conditions "c" described in JIS Z8722: 2009. The SCI method is a method of measurement based on entire reflected light (including a regular reflected light).

### [Measurement of Water Content]

The cacao mass obtained in (3) was used as a sample. The water content of the sample was measured in accordance with "5. Carbohydrates, (b) Water Content, (3) Reduced-Pressure-Heating Drying Method" in "Appendix: Analysis Methods for Nutritional Components" (https://www.caa.go.jp/policies/policy/food_labeling/food_labeling_act/pd f/food_labeling_cms101_200327_11.pdf) attached to "Food Labeling Standards (Consumer Affairs Agency Food Labeling Division Notification No. 139 of March 30, 2015)", a notification for food labeling by the Consumer Affairs Agency, Government of Japan. Table 8 shows the measurement results.

The measurement method for the water content is specifically as follows:
The constant weight (W0 (g)) of a weighing dish (with a lid) having a bottom diameter of 50 mm is determined. Subsequently, 2 g of a sample is placed on the weighing dish, and the resultant is weighed (W1 (g)). Then, the weighing dish with the lid slightly slid is put in a vacuum dryer with the temperature adjusted to 100°C, and the degree of vacuum is set to 25 mmHg by sucking with a vacuum pump. After drying under reduced pressure for 2 hours, the vacuum pump is turned off, dehumidified air is calmly introduced into the vacuum dryer to bring back to normal pressure, the weighing dish is taken out, and the constant weight (W2 (g)) is determined with the weighing dish closed with the lid. The water content of the sample is determined from the following formula. Water content of sample (% by mass) = {(W1 - W2) / (W1 - W0)} × 100

### [Measurement of Median Diameter (D₅₀)]

The cacao mass obtained in (3) was used as a sample. In a container, 0.3 g of the sample was placed, melted with a hot-water bath at 50°C for 10 minutes, and subsequently dispersed in 50 mL of isopropanol and treated with an ultrasonic bath for 2 minutes, and the sample under stirring with a stirrer was collected. The collected sample was dispersed in a cell filled with isopropanol, and the volume-based particle size distribution was measured to determine the median diameter (D₅₀) using the laser diffraction particle size analyzer SALD-2200 manufactured by Shimadzu Corporation. Table 8 shows the measurement results. The median diameter (D₅₀) is a particle diameter at which a cumulative volume of 50% is achieved in volume-based particle size distribution.

### [Measurement of Viscosity]

The cacao mass obtained in (3) was used as a sample. In a container, 10 g of the sample was placed and melted with a hot-water bath at 50°C for 10 minutes, and the container was then taken out of the hot-water bath, transferred to a normal-temperature environment, and subjected to temperature control until the temperature of the cacao mass reached 32°C. The viscosity of the cacao mass after the temperature control was measured using a Viscotester VT-06 and a No. 2 rotor manufactured by RION Co., Ltd. Table 8 shows the measurement results.

### [Example 2]

### (1) Preparation of Chocolate

The cacao mass obtained in (3) of Example 1, sugar, cocoa butter, and lecithin were mixed to give chocolate dough having a composition shown below. The obtained chocolate dough was tempered, and molded to give chocolate.

### [Composition of Chocolate Dough]

Cacao mass: 50.0% by mass
Sugar: 37.5% by mass
Butter: 12.0% by mass
Lecithin: 0.5% by mass
Total: 100% by mass

### (2) Evaluation of Chocolate

Two specialized panelists (panelists specialized in chocolate who had been trained to be able to give the same grade to the same sample) performed sensory evaluation for the chocolate obtained in (1). Criteria in the sensory evaluation are as shown below. Table 9 shows the results of the sensory evaluation.

### [Evaluation Criteria (Sour Taste, Bitter Taste, Astringent Taste, Taste Like Milk, Grassy Odor, Bean Odor, Earthy Odor, Gorgeousness, Cacao Taste, Roasted Taste)]

1: Not felt at all
2: Hardly felt
3: Slightly felt
4: Felt to some degree
5: Somewhat strongly felt
6: Strongly felt
7: Very strongly felt

### [Example 3]

### (1) Preparation of Beverage

A cacao mass was obtained in the same manner as in (3) of Example 1. With the obtained cacao mass, materials were mixed to give a composition shown below. The resulting mixture was heated to 60°C, then treated with a homomixer at 8000 rpm for 5 minutes, then batch-sterilized at 85°C with stirring, and then batch-cooled to 10°C or less with stirring, giving a beverage.

### [Composition of Beverage]

Cacao mass: 4.00% by mass
Sugar: 5.00% by mass
Cocoa butter: 0.80% by mass
Thickener (carrageenan): 0.10% by mass
Stabilizer (carboxymethylcellulose): 0.25% by mass
First emulsifying agent: 0.1% by mass
Second emulsifying agent: 0.1% by mass
Water: 89.65% by mass

### (2) Evaluation of Beverage

### [Measurement of Fragrance Components]

Measurement of fragrance components was performed in the same manner as in (4) of Example 1 except that the beverage obtained in (1) was used as a sample.

From the peak areas of acetone, 2-methylbutanal, and 3-methylbutanal in the acquired chromatogram,
the ratio of the peak area of acetone to the peak area of 2-methylbutanal (peak area of acetone/peak area of 2-methylbutanal), and
the ratio of the peak area of acetone to the peak area of 3-methylbutanal (peak area of acetone/peak area of 3-methylbutanal) were determined. Identification of the fragrance components was performed by comparing with data included in a database from Agilent Technologies. The measurement of the peak areas was performed using analysis software (MSD ChemStation) attached to the measuring apparatus. Table 10 shows the measurement results.

### [Measurement of L*, a*, and b* Values of L*a*b* Color Space]

The beverage obtained in (1) was used as a sample. Into a 28ϕ cell (LAV 28 mm), 3 mL of the sample was poured, and the L*, a*, and b* values of L*a*b* Color Space were measured twice, and the mean value was determined. Table 11 shows the measurement results. Each value in Table 11 is a mean value from two measurements.

The measurement of L*, a*, and b* values was performed using an SE7700 manufactured by NIPPON DENSHOKU INDUSTRIES CO., LTD. by an SCI method in accordance with spectrophotometric colorimetry and geometric conditions "b" (0°:45°c) (0° illumination: 45° circumferential light reception) described in JIS Z8722: 2009. The SCI method is a method of measurement based on entire reflected light (including a regular reflected light).

### [Sensory Evaluation]

Two specialized panelists (specialized panelists who had been trained to be able to give the same grade to the same sample) performed sensory evaluation for the beverage obtained in (1). Criteria in the sensory evaluation are as shown below. Table 12 shows the results of the sensory evaluation.

### [Evaluation Criteria (Sweet Taste, Sour Taste, Bitter Taste, Astringent Taste, Taste Like Milk, Richness, Grassy Odor, Bean Odor, Earthy Odor, Gorgeousness, Refreshing Feeling of Aftertaste, Cacao Taste, Roasted Taste)]

1: Not felt at all
2: Hardly felt
3: Slightly felt
4: Felt to some degree
5: Somewhat strongly felt
6: Strongly felt
7: Very strongly felt

### [Example 4]

### (1) Preparation of Beverage

The cacao beans obtained in (1) of Example 1 were subjected to a sterilizing treatment according to a conventional method. After the sterilizing treatment, 400 g of the cacao beans was roasted until a product temperature of 120°C was reached. The roasted cacao beans were subjected to cut test, and purple beans were removed. Thereafter, the hull was removed to give cacao nibs. The obtained cacao nibs were pulverized with a roll, giving a cacao mass. A beverage was obtained in the same manner as in Example 3 except that the obtained cacao mass was used.

### (2) Evaluation of Beverage

### [Measurement of Fragrance Components]

Measurement of fragrance components was performed in the same manner as in (4) of Example 1 except that the beverage obtained in (1) was used as a sample.

From the peak areas of acetone, 2-methylbutanal, and 3-methylbutanal in the acquired chromatogram,
the ratio of the peak area of acetone to the peak area of 2-methylbutanal (peak area of acetone/peak area of 2-methylbutanal), and
the ratio of the peak area of acetone to the peak area of 3-methylbutanal (peak area of acetone/peak area of 3-methylbutanal) were determined. Identification of the fragrance components was performed by comparing with data included in a database from Agilent Technologies. The measurement of the peak areas was performed using analysis software (MSD ChemStation) attached to the measuring apparatus. Table 13 shows the measurement results.

### [Comparative Example 1]

Baba (raw cacao beans with pulps) was taken out of pods of Carmelo cacao from the United Mexican States. The baba taken out was directly placed in the sun and dried until the water content reached 6 to 7% by mass. Thus, unfermented cacao beans not subjected to microwave oven treatment were obtained. With the obtained cacao beans, evaluation of the cacao beans, preparation of a cacao mass, evaluation of the cacao mass, preparation of chocolate, and evaluation of the chocolate were performed in the same manner as in Examples 1 to 4. Tables 1 to 13 show the measurement results.

### [Comparative Example 2]

Baba (raw cacao beans with pulps) was taken out of pods of Carmelo cacao from the United Mexican States. The baba taken out was placed in a fermentation box, in which fermentation was initiated and continued for 3 days in total. After the fermentation, a 200-g portion of the cacao beans taken out of the fermentation box was divided and placed in zippered plastic bags, and heated using a microwave oven (WM1211D manufactured by Whirpool (1350 W, 50 Hz)) for 3 minutes. In the heating with the microwave oven, the zippers were partially opened.

The baba subjected to the microwave oven treatment was taken out of each bag, and placed in the sun without removal of the pulp and dried until the water content reached 6 to 7% by mass. Thus, cacao beans subjected to microwave oven treatment after fermentation were obtained. With the obtained cacao beans, evaluation of the cacao beans, preparation of a cacao mass, evaluation of the cacao mass, preparation of chocolate, evaluation of the chocolate, preparation of a beverage, and evaluation of the beverage were performed in the same manner as in Examples 1 to 3. Tables 1 to 12 show the measurement results.

### [Comparative Example 3]

Baba (raw cacao beans with pulps) was taken out of pods of Carmelo cacao from the United Mexican States. The baba taken out was placed in a fermentation box, in which fermentation was initiated and continued for 3 days in total. The cacao beans after the fermentation were placed in the sun and dried until the water content reached 6 to 7% by mass. Thus, fermented cacao beans not subjected to microwave oven treatment were obtained. With the obtained cacao beans, evaluation of the cacao beans, preparation of a cacao mass, evaluation of the cacao mass, preparation of chocolate, evaluation of the chocolate, preparation of a beverage, and evaluation of the beverage were performed in the same manner as in Examples 1 to 3. Tables 1 to 12 show the measurement results.

### [Comparative Example 4]

400 g of fermented cacao beans from the Republic of Ghana was roasted until a product temperature of 130°C was reached. The roasted fermented cacao beans were removed of the hull to give cacao nibs. The obtained cacao nibs were pulverized with a roll, giving a cacao mass. With the obtained cacao mass, evaluation of the cacao mass, preparation of chocolate, evaluation of the chocolate, preparation of a beverage, and evaluation of the beverage were performed in the same manner as in Examples 1 to 3. Tables 6 to 12 show the measurement results.

### [Comparative Example 5]

Baba (raw cacao beans with pulps) was taken out of pods of Carmelo cacao from the United Mexican States. To a container in which 100 L of drinking water had been placed and boiled, 7.5 kg of the baba taken out was added, and heated for 12 minutes. At least part of the pulps is removed by heating in boiling water. Thus, unfermented cacao beans subjected to boiling treatment were obtained. With the obtained cacao beans, preparation of a cacao mass, evaluation of the cacao mass, preparation of chocolate, evaluation of the chocolate, preparation of a beverage, and evaluation of the beverage were performed in the same manner as in Examples 1 to 3. Tables 6 to 12 show the measurement results.

**[Table 1]**

| Table 1: Evaluation of cacao beans | | | | |
|---|---|---|---|---|
| | Example 1 | Comparative Example 1 | Comparative Example 2 | Comparative Example 3 |
| L* | 49.09 | 48.12 | 32.64 | 32.44 |
| a* | 8.85 | 9.60 | 12.47 | 12.68 |
| b* | 20.62 | 23.72 | 12.42 | 12.58 |

**[Table 2]**

| Table 2: Evaluation of cacao beans | | | | |
|---|---|---|---|---|
| | Example 1 | Comparative Example 1 | Comparative Example 2 | Comparative Example 3 |
| Total amount of polyphenol (mg/g) | 51.4 | 54.5 | 37.4 | 40.4 |
| Amount of procyanidin (mg/g) | 25.5 | 26.5 | 9.9 | 9.2 |
| Amount of theobromine (mg/g) | 10.6 | 12.0 | 11.5 | 11.2 |
| Amount of caffeine (mg/g) | 4.1 | 5.2 | 4.0 | 5.0 |

**[Table 3]**

| Table 3: Evaluation of cacao beans | | | | |
|---|---|---|---|---|
| | Example 1 | Comparative Example 1 | Comparative Example 2 | Comparative Example 3 |
| GABA (µg/g) | 60.3 | 516.9 | 345.1 | 533.3 |

**[Table 4]**

| Table 4: Evaluation of cacao beans | | | | |
|---|---|---|---|---|
| | Example 1 | Comparative Example 1 | Comparative Example 2 | Comparative Example 3 |
| Total amount of amino acids (µg/g) | 2213.6 | 2425.4 | 3341.2 | 5147.9 |

**[Table 5]**

| Table 5: Evaluation of cacao beans | | | | |
|---|---|---|---|---|
| | Example 1 | Comparative Example 1 | Comparative Example 2 | Comparative Example 3 |
| Sucrose (mg/g) | 19.4 | 14.5 | 8.3 | 6.9 |

**[Table 6]**

| Table 6: Evaluation of cacao mass | | | | | | |
|---|---|---|---|---|---|---|
| Peak area ratio of fragrance component | Example 1 | Comparative Example 1 | Comparative Example 2 | Comparative Example 3 | Comparative Example 4 | Comparative Example 5 |
| acetone/ 2-methylbutanal | 16.70 | 3.59 | 0.66 | 0.79 | 0.59 | 4.13 |
| acetone/ 3-methylbutanal | 30.46 | 1.21 | 1.00 | 0.73 | 0.24 | 7.11 |
| acetone/ hexanal | 8.76 | 2.61 | 2.97 | 1.67 | 1.28 | 1.10 |
| acetone/ acetic acid | 0.06 | 0.01 | 0.00 | 0.00 | 0.00 | 0.01 |
| acetone/ isopropyl alcohol | 1.63 | 0.28 | 0.03 | 0.02 | 0.29 | 1.07 |

**[Table 7]**

| Table 7: Evaluation of cacao mass | | | | | | |
|---|---|---|---|---|---|---|
| | Example 1 | Comparative Example 1 | Comparative Example 2 | Comparative Example 3 | Comparative Example 4 | Comparative Example 5 |
| L* | 44.94 | 39.27 | 38.69 | 26.17 | 26.17 | 41.70 |
| a* | 5.57 | 9.54 | 7.97 | 10.30 | 10.30 | 9.96 |
| b* | 12.62 | 14.65 | 11.28 | 7.82 | 7.82 | 16.15 |

**[Table 8]**

| Table 8: Evaluation of cacao mass | | |
|---|---|---|
| | Example 1 | Comparative Example 1 |
| Water content (% by mass) | 3.92 | 3.74 |
| Median diameter (µm) | 7.733 | 7.193 |
| Average particle diameter (µm) | 6.167 | 0.366 |
| Viscosity (cP) | 7200 | 11300 |

**[Table 9]**

| Table 9: Evaluation of chocolate | | | | | | |
|---|---|---|---|---|---|---|
| | Example 2 | Comparative Example 1 | Comparative Example 2 | Comparative Example 3 | Comparative Example 4 | Comparative Example 5 |
| Sour taste | 2 | 2.5 | 3 | 3.5 | 3.5 | 2 |
| Bitter taste | 4 | 5.5 | 3.5 | 2.5 | 3.5 | 3.5 |
| Astringent taste | 3.5 | 6 | 3 | 2.5 | 3.5 | 3.5 |
| Taste like milk | 5.5 | 3 | 4 | 2 | 3.5 | 4.5 |
| Grassy odor (green) | 2 | 4.5 | 3 | 1 | 2 | 3 |
| Bean odor | 2 | 4.5 | 2.5 | 1 | 2 | 3.5 |
| Earthy odor (woody) | 3 | 5 | 2.5 | 1.5 | 3 | 4 |
| Gorgeousness (floral) | 2 | 1.5 | 2.5 | 4.5 | 3.5 | 2 |
| Cacao taste | 2.5 | 2.5 | 3.5 | 5.5 | 4.5 | 2.5 |
| Roasted taste | 2 | 2 | 3.5 | 6 | 3.5 | 3 |

**[Table 10]**

| Table 10: Evaluation of beverage | | | | | | |
|---|---|---|---|---|---|---|
| Peak area ratio of fragrance component | Example 3 | Comparative Example 1 | Comparative Example 2 | Comparative Example 3 | Comparative Example 4 | Comparative Example 5 |
| acetone/ 2-methylbutanal | 0.35 | 0.23 | 0.05 | 0.04 | 0.04 | 0.20 |
| acetone/ 3-methylbutanal | 0.61 | 0.39 | 0.04 | 0.03 | 0.02 | 0.48 |

**[Table 11]**

| Table 11: Evaluation of beverage | | | | | | |
|---|---|---|---|---|---|---|
| | Example 3 | Comparative Example 1 | Comparative Example 2 | Comparative Example 3 | Comparative Example 4 | Comparative Example 5 |
| L* | 65.67 | 65.26 | 52.02 | 57.27 | 43.21 | 66.89 |
| a* | 2.36 | 3.93 | 7.16 | 6.42 | 10.80 | 3.71 |
| b* | 13.29 | 20.74 | 25.84 | 22.82 | 19.80 | 11.16 |

**[Table 12]**

| Table 12: Evaluation of beverage | | | | | | |
|---|---|---|---|---|---|---|
| | Example 3 | Comparative Example 1 | Comparative Example 2 | Comparative Example 3 | Comparative Example 4 | Comparative Example 5 |
| Sweet taste | 4 | 3.5 | 5 | 4.5 | 5.5 | 4.5 |
| Sour taste | 2 | 3.5 | 4.5 | 4 | 3.5 | 3 |
| Bitter taste | 3.5 | 5 | 3.5 | 3.5 | 2 | 3 |
| Astringent taste | 2.5 | 4.5 | 2.5 | 2.5 | 1.5 | 2.5 |
| Taste like milk | 5.5 | 4 | 2.5 | 2.5 | 1.5 | 4 |
| Richness | 5.5 | 4 | 3.5 | 3.5 | 2 | 3.5 |
| Grassy odor (green) | 2.5 | 4.5 | 2.5 | 3 | 1.5 | 4.5 |
| Bean odor | 3 | 4.5 | 3 | 3 | 1.5 | 5.5 |
| Earthy odor (woody) | 3 | 4.5 | 3 | 3 | 1.5 | 5 |
| Gorgeousness (floral) | 4.5 | 3.5 | 3.5 | 3.5 | 4 | 3 |
| Refreshing feeling of aftertaste | 5 | 3.5 | 3.5 | 3.5 | 1.5 | 3 |
| Cacao taste | 1 | 2 | 4.5 | 4.5 | 6 | 2 |
| Roasted taste | 1.5 | 2 | 4 | 4.5 | 6 | 1.5 |

**[Table 13]**

| Table 13: Evaluation of beverage | | |
|---|---|---|
| Peak area ratio of fragrance component | Example 4 | Comparative Example 1 |
| acetone/2-methylbutanal | 0.73 | 0.28 |
| acetone/3-methylbutanal | 1.39 | 0.47 |

As shown in Table 6, a cacao mass containing: acetone; and at least one selected from 2-methylbutanal, 3-methylbutanal, isopropyl alcohol, hexanal, and acetic acid,
wherein the cacao mass, when analyzed by solid phase microextraction-gas chromatography-mass spectrometry, satisfies at least one of the following (A) to (E):
(A) a ratio of a peak area of acetone to a peak area of 2-methylbutanal is 5.0 or more;
(B) a ratio of a peak area of acetone to a peak area of 3-methylbutanal is 8.0 or more;
(C) a ratio of a peak area of acetone to a peak area of isopropyl alcohol is 1.2 or more;
(D) a ratio of a peak area of acetone to a peak area of hexanal is 4.0 or more; and
(E) a ratio of a peak area of acetone to a peak area of acetic acid is 0.03 or more.
was successfully obtained in Example 1, whereas such a cacao mass was not obtained in Comparative Examples 1 to 5.

As shown in Table 8, the water content and median diameter of the cacao mass obtained in Example 1 and those of the cacao mass obtained in Comparative Example 1 were not largely different, but the viscosity of the cacao mass obtained in Example 1 was significantly lower than that of the cacao mass obtained in Comparative Example 1.

As shown in Table 9, the chocolate obtained in Example 2 had bean odor, grassy odor, and sour taste comparable to or weaker than those of the chocolates obtained in Comparative Examples 1 to 5, and had very stronger taste like milk than the chocolates obtained in Comparative Examples 1 to 5.

As shown in Table 10, a beverage containing: acetone; and at least one selected from 2-methylbutanal and 3-methylbutanal,
wherein the beverage, when analyzed by solid phase microextraction-gas chromatography-mass spectrometry, satisfies at least one of the following (F) and (G):
(F) a ratio of a peak area of acetone to a peak area of 2-methylbutanal is 0.25 or more; and
(G) a ratio of a peak area of acetone to a peak area of 3-methylbutanal is 0.50 or more
was successfully obtained in Example 3, but such a beverage was not obtained in Comparative Example 1.

As shown in Table 12, the beverage obtained in Example 3 had bean odor, grassy odor, and sour taste comparable to or weaker than those of the beverages obtained in Comparative Examples 1 to 5, and had very stronger taste like milk than the beverages obtained in Comparative Examples 1 to 5.

As shown in Table 13, through preparation of a beverage using the cacao mass obtained from cacao beans subjected to a sterilizing treatment, a beverage containing: acetone; and at least one selected from 2-methylbutanal and 3-methylbutanal,
wherein the beverage, when analyzed by solid phase microextraction-gas chromatography-mass spectrometry, satisfies at least one of the following (F) and (G):
(F) a ratio of a peak area of acetone to a peak area of 2-methylbutanal is 0.25 or more; and
(G) a ratio of a peak area of acetone to a peak area of 3-methylbutanal is 0.50 or more
was successfully obtained in Example 4, whereas such a beverage was not obtained in Comparative Example 1.

## Claims

1. A cacao bean processed product comprising:
acetone; and
at least one selected from 2-methylbutanal, 3-methylbutanal, and isopropyl alcohol,
wherein the cacao bean processed product, when analyzed by solid phase microextraction-gas chromatography-mass spectrometry, satisfies at least one of the following (A) to (C):
(A) a ratio of a peak area of acetone to a peak area of 2-methylbutanal is 5.0 or more;
(B) a ratio of a peak area of acetone to a peak area of 3-methylbutanal is 8.0 or more; and
(C) a ratio of a peak area of acetone to a peak area of isopropyl alcohol is 1.2 or more.

2. The cacao bean processed product according to claim 1,
wherein the cacao bean processed product comprises at least one selected from hexanal and acetic acid, and
wherein the cacao bean processed product, when analyzed by solid phase microextraction-gas chromatography-mass spectrometry, satisfies at least one of the following (D) and (E):
(D) a ratio of a peak area of acetone to a peak area of hexanal is 4.0 or more; and
(E) a ratio of a peak area of acetone to a peak area of acetic acid is 0.03 or more.

3. The cacao bean processed product according to claim 2,
wherein the cacao bean processed product comprises acetone, 2-methylbutanal, 3-methylbutanal, isopropyl alcohol, hexanal, and acetic acid, and
wherein the cacao bean processed product, when analyzed by solid phase microextraction-gas chromatography-mass spectrometry, satisfies all of (A) to (E).

4. The cacao bean processed product according to any one of claims 1 to 3, wherein L*, a*, and b* values of L*a*b* Color Space are L*: 42 or more and 55 or less, a*: 3.0 or more and 7.0 or less, and b*: 9.0 or more and 15.0 or less, respectively.

5. The cacao bean processed product according to any one of claims 1 to 3, wherein an amount of γ-aminobutyric acid is 200 µg/g or less.

6. The cacao bean processed product according to any one of claims 1 to 3, wherein the cacao bean processed product is a cacao mass.

7. The cacao bean processed product according to claim 6, wherein, in a state where the cacao bean processed product has a median diameter of 7 µm or more and 8 µm or less and a water content of 3 mass% or more and 4 mass% or less, the cacao bean processed product has a viscosity of 10000 cP or less.

8. A material composition for a food, comprising the cacao bean processed product according to any one of claims 1 to 3.

9. A food comprising the material composition for a food according to claim 8.

10. The food according to claim 9, wherein the food is selected from beverages, frozen desserts, and oily confectioneries.

11. The food according to claim 9,
wherein the food comprises:
acetone; and
at least one selected from 2-methylbutanal and 3-methylbutanal, and
wherein the food, when analyzed by solid phase microextraction-gas chromatography-mass spectrometry, satisfies at least one of the following (F) and (G):
(F) a ratio of a peak area of acetone to a peak area of 2-methylbutanal is 0.25 or more; and
(G) a ratio of a peak area of acetone to a peak area of 3-methylbutanal is 0.50 or more.

12. The food according to claim 11, wherein the food is a beverage.
